# FASCICULE DE BREVET EUROPEEN

(11) **EP 3 538 992 B1**
(45) Date de publication et mention de la délivrance du brevet: **25.11.2020**
(21) Numéro de dépôt: 17793712.5
(22) Date de dépôt: 13.10.2017
(51) Int. Cl.: G06F 9/445, G06F 9/52

(54) **SYSTEME ET PROCEDE DE MAINTENANCE A CHAUD D'UN CALCULATEUR DE VEHICULE**
SYSTEM UND VERFAHREN ZUR NOTFALLWARTUNG EINES FAHRZEUGCOMPUTERS
SYSTEM AND METHOD FOR EMERGENCY MAINTENANCE OF A VEHICLE COMPUTER

(30) Priorité: 14.11.2016 FR 1660964
(43) Date de publication de la demande: 18.09.2019
(73) Titulaire: PSA Automobiles SA, 78300 Poissy (FR)
(72) Inventeur: BAVOUX, Bernard, 91440 Bures sur Yvette (FR); FRANCOIS, Nicolas, 75020 Paris (FR); LEVASSEUR, Guillaume, 92000 Nanterre (FR); EL ALI, Farah, 92310 Sèvres (FR); GRAVIER, Erwan, 78800 Houilles (FR)
(86) Numéro de dépôt international: PCT/FR2017/052821
(87) Numéro de publication internationale: WO 2018/087445

(56) Documents cités:
- FR-A1- 2 897 192
- US-A1- 2014 082 599
- Jean-Charles Fabre, Hélène Martorell et al: "Partial Updates of AUTOSAR Embedded Applications - To What Extent? PartialUpdatesofAUTOSAREmbedded Applications-ToWhatExtent?", 11th European Dependable Computing Conference (EDCC 2015), 1 septembre 2015 (2015-09-01), pages 1-12, XP055394464, Paris Extrait de l'Internet: URL:https://hal-univ-tlse3.archives-ouvert es.fr/hal-01194832/document [extrait le 2017-07-27]
- Jean-Charles Fabre, Hélène Martorell et al: "Improving Adaptiveness of AUTOSAR Embedded Applications ImprovingAdaptivenessofAUTOSAR EmbeddedApplications Jean-CharlesFabre", ACM Symposium on Applied Computing, Mar 2014, Gyeongju, South Korea, 1 mars 2014 (2014-03-01), pages 384-390, XP055394466, Extrait de l'Internet: URL:https://hal-univ-tlse3.archives-ouvert es.fr/hal-01062054/document [extrait le 2017-07-27]

## Description

L'invention concerne, de façon générale, la maintenance d'un calculateur embarqué dans un véhicule, notamment dans un véhicule automobile.

L'invention porte plus particulièrement sur un système et un procédé de maintenance d'un calculateur embarqué, permettant la lecture et l'écriture de données variables de programmes d'application, à chaud et en cours d'opération de maintenance.

Aujourd'hui, notamment dans le domaine automobile, lors d'opérations de maintenance d'un système embarqué piloté, avec un calculateur exécutant un logiciel composé d'une pluralité de programmes d'application mettant respectivement à jour différentes données applicatives variables, il est souvent impossible de conserver ou de mettre à jour automatiquement toutes les données applicatives variables dans le cadre de ladite opération maintenance.

De ce fait, après l'exécution d'opérations de maintenance sur un calculateur embarqué, il est souvent nécessaire de réaliser des opérations manuelles pour ressaisir ces données applicatives, lorsque c'est possible (compteur kilométrique, etc.), ou pour remettre en cohérence les organes du véhicule avec les valeurs réinitialisées de ces données (refaire le plein d'urée, faire une vidange, régénérer le pot catalytique, etc.).

Dans le domaine automobile, l'initiative AUTOSAR, pour AUTomative Open System Architecture, signifiant architecture de système ouvert pour l'automobile en langue anglaise, consiste en un partenariat mondial entre industriels de l'automobile, visant la mise au point d'un mécanisme pour la fourniture de données de maintenance aux outils des garagistes, via un module spécifique désigné Diagnostic Communication Manager, encore nommé DCM, signifiant gestionnaire de communication et de diagnostic.

Ce mécanisme AUTOSAR présente cependant certaines lacunes car il n'est pas compatible de tous les systèmes embarqués automobiles et présente une complexité de mise en œuvre élevée, comme cela est décrit ci-après.

Par ailleurs, dans d'autres domaines que l'automobile, il existe des systèmes incorporant des procédés d'accès à des données de maintenance ou d'utilisation, notamment lors de téléchargement de logiciel par liaison filaire ou par télécommunications radiofréquences. Par exemple, les ordinateurs ou objets nomades comme les smartphones peuvent conserver des carnets d'adresses lors de la mise à jour de leur logiciel.

Cependant, le contexte et les contraintes de l'automobile, en particulier des calculateurs de contrôle moteur, sont différents, notamment en ce qu'ils comprennent les spécificités suivantes :
- les données applicatives d'un logiciel exécuté par un calculateur de contrôle moteur par exemple ne sont pas stockées dans un système de gestion de données standardisé pouvant être accédé indépendamment des programmes d'application, mais elles se trouvent distribuées dans un ensemble de modules correspondant auxdits programmes d'application. En pratique le lieu de stockage d'une donnée applicative variable est celui qui est attribué à la fonction qui pilote l'organe fonctionnel concerné par cette donnée applicative variable ;
- les données applicatives variables, notamment liées à la maintenance, sont non seulement réparties en différents endroits de la mémoire, mais aussi mélangées avec des données fixes et variables liées aux états de fonctionnement de chaque organe fonctionnel, par exemple des données d'initialisation ou des variables de calcul ;
- il n'est pas possible d'arrêter les applications de contrôle moteur, qui modifient les données applicatives pendant leur accès en lecture par un programme extérieur, tel qu'un outil externe de maintenance ;
- les données applicatives variables sont continuellement mises à jour par les programmes d'application, y compris pendant leur accès par un programme extérieur, ce qui pose problème pour les mettre à jour par un outil externe de maintenance notamment, car les nouvelles valeurs entrées par l'outil externe de maintenance peuvent être écrasées par les programmes d'application en cours de fonctionnement, par exemple par des valeurs d'initialisation prédéterminées ou par de nouvelles acquisitions ;
- les données applicatives variables, liées à la maintenance et à l'utilisation d'un véhicule, concernent des organes fonctionnels qui ne sont généralement pas « intelligents », de sorte que ces données sont créées par le calculateur embarqué, par exemple de contrôle moteur, et ne peuvent pas être retrouvées dans les organes fonctionnels si elles sont effacées dans ledit calculateur embarqué.

Ces spécificités engendrent de facto, aujourd'hui, des opérations manuelles onéreuses lors d'opérations de maintenance en service après-vente. De plus, ces nécessaires opérations manuelles rendent par définition inapplicable l'utilisation de procédés automatiques de mise à jour par télécommunication de type SOTA, pour Software Over The Air, signifiant logiciel à distance.

Par ailleurs, lorsqu'une nouvelle version du logiciel d'un calculateur embarqué est téléchargée dans un calculateur existant, il arrive que cette nouvelle version mette en œuvre de nouvelles fonctions régies par des programmes d'application qui utilisent de nouvelles données applicatives variables. Il se peut alors que la structure des données applicatives variables définie par le nouveau logiciel soit incompatible de la structure des données applicatives variables existant préalablement. De ce fait, il peut survenir une perte de données applicatives variables lors d'une mise à jour logicielle selon les procédures de mise à jour automatique connues, car le nouveau logiciel ne retrouve pas les données applicatives à l'adresse attendue en mémoire.

Dans le cadre du mécanisme AUTOSAR, on connaît des dispositifs de mise à jour d'applications logicielles embarquées dans un véhicule et ce pendant que le véhicule fonctionne. Le document "Partial Updates of AUTOSAR Embedded Applications - To What Extent?" de Jean-Charles Fabre et al, publié lors de la conférence EDCC 2015, 11th European Dependable Computing Conférence à Paris décrit un tel dispositif. Il propose un mécanisme de container adressable par pointeurs pour stocker les fonctionnalités logicielles ajoutées. Les phases de mises-à-jour nécessitent toujours une étape hors-ligne durant laquelle les variables des fonctionnalités mises à jour ne sont pas accessibles.

Comme évoqué précédemment, le mécanisme AUTOSAR ne permet pas de répondre totalement à cette problématique. En effet, ce mécanisme permet la réalisation d'opérations de maintenance, via un programme de maintenance extérieur au calculateur embarqué concerné, au moyen d'une émission de données et/ou d'une communication de données via des communications de type client/serveur synchrones et/ou d'une communication de données via des communications de type client/serveur asynchrones.

Dans les deux premiers cas, une mise à jour ne peut être réalisée efficacement que si aucun programme d'application n'utilise, que ce soit en lecture ou en écriture, des données applicatives faisant l'objet de la mise à jour. Cela ne peut être garanti, notamment, pour un calculateur embarqué de contrôle moteur. Dans les cas où ces modes de mise à jour peuvent être mis en œuvre, cela introduit néanmoins de fortes contraintes sur la conception des programmes d'application exécutés sur le calculateur concerné.

Le dernier mécanisme de mise à jour, via des communications de type client/serveurs asynchrones, serait envisageable mais il est très complexe à mettre en œuvre et impacte fortement la conception des logiciels des calculateurs embarqués.

Il existe donc un besoin pour un procédé et un système embarqués, notamment dans un véhicule, permettant une gestion centralisée des données applicatives variables d'un logiciel du système embarqué faisant l'objet d'une opération de maintenance, afin de permettre l'accès à ces données applicatives en écriture et en lecture, sans interrompre les programmes d'application embarquées qui sont productrices et consommatrices desdites données applicatives.

Pour parvenir à ce résultat, la présente invention concerne un système embarqué piloté destiné à un véhicule, ledit système comprenant un calculateur pour la gestion du système embarqué ploté, ledit calculateur comprenant un ensemble de programmes et des ressources matérielles pour exécuter lesdits programmes, lesdites ressources matérielles comprenant une pluralité de mémoires, dont au moins une mémoire non volatile réinscriptible et une mémoire volatile, et une unité de calcul, lesdits programmes comprenant au moins deux programmes d'application comprenant un programme de supervision et au moins un programme d'application fonctionnelle, ledit au moins un programme d'application fonctionnelle présentant des données applicatives lues et écrites en des adresses de ladite au moins une mémoire volatile lorsque ledit programme d'application fonctionnelle correspondant est exécuté par le calculateur, ledit programme de supervision présentant au moins un couple de données comprenant une mémoire tampon et un drapeau, ladite mémoire tampon comprenant des emplacement et étant configurée pour que lesdits emplacements reçoivent des données applicatives lorsqu'une opération de maintenance est exécutée par un outil de maintenance connecté au système alors qu'au moins un programme d'application fonctionnelle est exécuté par le calculateur, et ledit drapeau étant configuré pour changer de valeur lorsque l'outil de maintenance requiert l'écriture de données applicatives, le programme de supervision comprenant en outre une table de correspondance prédéterminée établissant une correspondance entre l'emplacement de chaque donnée applicative reçue dans la mémoire tampon et les adresses correspondantes desdites données applicatives en mémoire volatile, lesdites données applicatives reçues en mémoire tampon du programme de supervision étant ordonnées dans les emplacements de ladite mémoire tampon selon ladite table de correspondance prédéterminée.

Grâce à l'invention, un outil externe de maintenance peut accéder en lecture et en écriture à des données applicatives variables pourtant utilisées par des programmes d'application en cours d'exécution sur le calculateur embarqué faisant l'objet de l'opération de maintenance.

Avantageusement, le système comprend au moins un programme de base, ledit au moins un programme de base comprenant un programme de gestion des accès en lecture et en écriture à ladite au moins une mémoire non volatile.

Avantageusement, le système comprend par ailleurs un programme de gestion des communications avec l'outil externe de maintenance.

La présente invention vise également un procédé de maintenance d'un tel système embarqué piloté, ledit procédé de maintenance comprenant les étapes suivantes :
- au démarrage du calculateur, la copie, par le programme de supervision, des données applicatives dudit au moins un programme d'application fonctionnelle, lesdites données applicatives étant reçues et stockées au sein de la mémoire tampon du programme de supervision,
- l'utilisation, par le programme de supervision, des données applicatives dans la mémoire tampon pour répondre à des demandes de lecture desdites données applicatives par l'outil externe de maintenance, y compris alors que les programmes d'application lisant et/ou écrivant lesdites données applicatives sont en cours exécution.

Selon un mode de réalisation, une valeur par défaut d'une donnée applicative obsolète est écrite dans la mémoire tampon dans le cas où ladite donnée applicative obsolète n'est pas utilisée dans l'ensemble de programmes mis en œuvre par le calculateur.

Avantageusement, le procédé de maintenance selon l'invention comprend les étapes suivantes, lorsque l'outil externe de maintenance demande l'écriture d'une nouvelle valeur d'une donnée applicative :
- la mémorisation de la nouvelle valeur de la donnée applicative à écrire, par le programme de supervision, dans la mémoire tampon, à l'emplacement correspondant à ladite donnée applicative dans la mémoire tampon selon la table de correspondance,
- le changement d'état du drapeau, en vue de permettre la mémorisation dans le calculateur de la nouvelle valeur de la donnée applicative lors du prochain redémarrage du calculateur.

Selon un mode de réalisation, une valeur par défaut de la donnée applicative à écrire est utilisée dans le cas où une nouvelle valeur n'est pas disponible dans l'outil externe de maintenance.

L'invention concerne également un véhicule automobile comprenant un système tel que brièvement décrit ci-dessus.

D'autres caractéristiques et avantages de l'invention apparaîtront à la lecture de la description détaillée des modes de réalisation de l'invention, donnés à titre d'exemple uniquement, et en référence aux dessins qui montrent :
- la figure 1, le schéma des ressources matérielles d'un calculateur embarqué d'un système selon l'invention ;
- la figure 2, le schéma fonctionnel d'un programme de supervision dans un système embarqué selon l'invention ;
- la figure 3, le schéma de la structure des données applicatives utilisées par un programme de supervision dans un système embarqué selon l'invention.

Dans ce qui va suivre, les modes de réalisation décrits s'attachent plus particulièrement à une mise en œuvre de l'invention dans un calculateur embarqué dans un véhicule automobile. Cependant, toute mise en œuvre dans un contexte différent, en particulier dans tout type de véhicule, est également visée par la présente invention.

L'invention se situe au sein d'un système embarqué piloté composé :
- d'un calculateur embarqué, chargé de la gestion du système et éventuellement du pilotage du système,
- de programmes d'application exécutés par le calculateur embarqué, lesdits programmes d'application accédant, en lecture et en écriture, à des données applicatives, variables, stockées dans une mémoire du calculateur embarqué.

En pratique, un tel système embarqué comprend par ailleurs des organes fonctionnels, notamment mécaniques, non détaillés dans le cadre de la présente invention ni sur les figures, pour lesquels des données applicatives variables sont stockées en mémoire du calculateur embarqué, par exemple afin d'en surveiller l'usure, ou d'en optimiser l'utilisation.

L'invention consiste donc en un système ou un sous-système comprenant :
- un calculateur embarqué piloté apte à héberger un programme de supervision PA.PANDA pour optimiser la réalisation d'opérations de maintenance, notamment de mise à jour, d'un logiciel embarqué exécuté par le calculateur,
- le logiciel formé d'un ensemble de programmes, dont une pluralité de programmes d'application, dont le programme de supervision PA.PANDA.

Dans ledit logiciel, le programme de supervision PA.PANDA est associé à des données applicatives spécifiques au sein du calculateur embarqué, ces données étant structurées lors de la conception du logiciel selon une structure générique à tous les programmes d'application dudit logiciel.

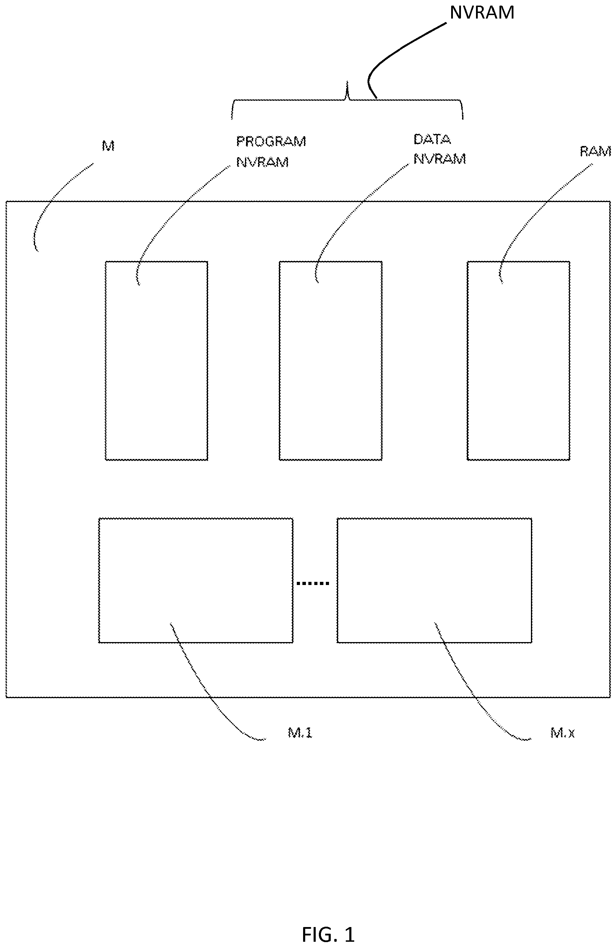

Un mode de réalisation du système - ou sous-système - selon l'invention est illustré aux figures 1 à 3.

En référence à la figure 1, le système selon l'invention comprend un calculateur présentant un ensemble de ressources matérielles M. Ces ressources matérielles M comprennent une pluralité d'espaces mémoires, dont au moins une mémoire non volatile NVRAM et une mémoire volatile RAM, et au moins une unité de calcul M.1. Dans le mode de réalisation représenté à la figure 1, lesdites ressources matérielles comprennent de préférence deux espaces mémoires non volatiles distincts, avec une mémoire non volatile pour les programmes, dont le programme de supervision, PROGRAM.NVRAM, et une mémoire non volatile pour les données applicatives des programmes, dont le programme de supervision, DATA.NVRAM. Les ressources matérielles M peuvent également comporter différents blocs fonctionnels M.x, comme représenté à la figure 1.

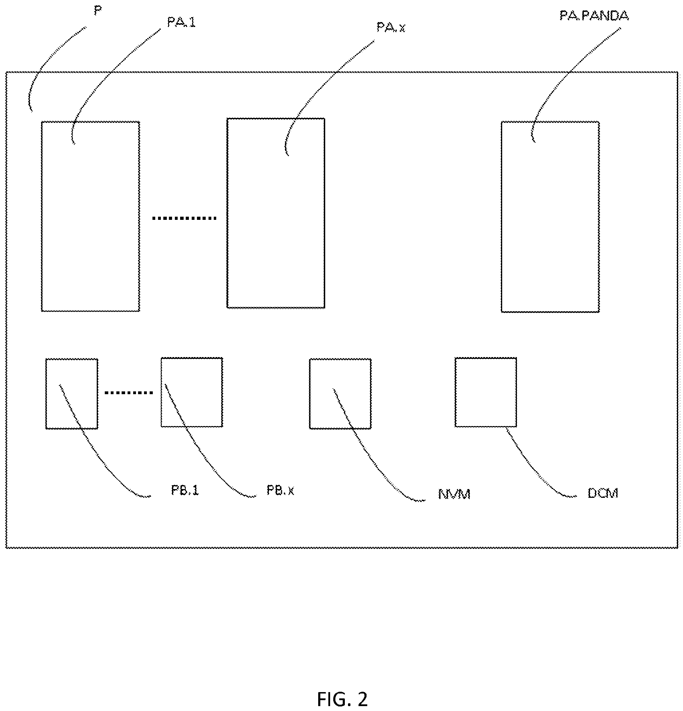

En référence à la figure 2, il est représenté schématiquement un logiciel consistant en un ensemble de programmes P mis en œuvre par le calculateur embarqué. Selon le mode de réalisation représenté, l'ensemble de ces programmes sont stockés au sein de la mémoire non volatile dédiée PROGRAM.NVRAM.

Parmi l'ensemble de ces programmes P, le calculateur supporte une pluralité de programmes d'application PA.1 à PA.x, dont le programme de supervision PA.PANDA, ainsi qu'au moins un programme dit de base PB.1 à PB.x chargé d'assurer l'interface avec les ressources matérielles notamment, dont un programme NVM de gestion des accès à la mémoire non volatile NVRAM, ou encore un programme DCM de gestion des communications avec un outil externe de maintenance pour le diagnostic.

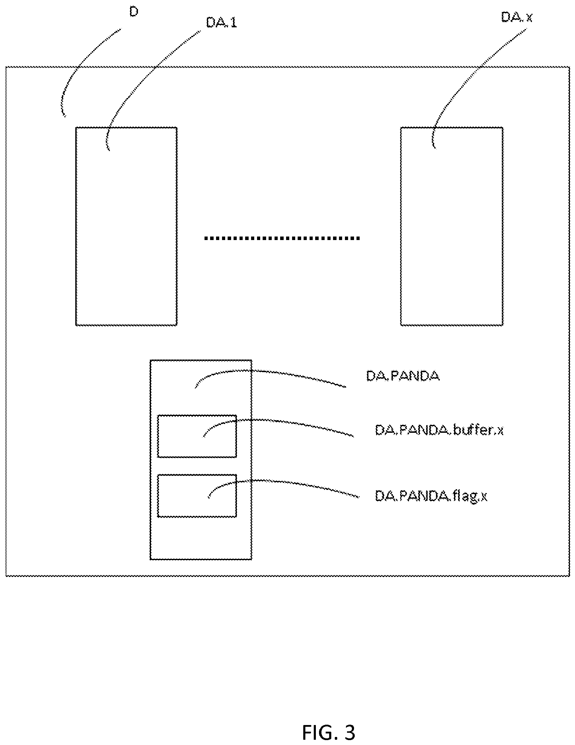

En référence à la figure 3, les données applicatives DA.PANDA du programme de supervision PA.PANDA sont décrites. Ces données du programme de supervision PA.PANDA sont stockées au sein de la mémoire volatile RAM.

Parmi ces données, il se trouve en particulier les données applicatives D, soit DA.1 à DA.x, lues et écrites respectivement par les différents programmes d'application PA.1 à PA.x, et les données spécifiques au programme de supervision DA.PANDA qui sont lues et écrites par le programme de supervision PA.PANDA. Les données spécifiques au programme de supervision DA.PANDA sont constituées d'au moins un couple de données formé d'une mémoire tampon buffer.x et d'un drapeau flag.x. De façon générale, un seul couple de données applicatives spécifiques au programme de supervision est nécessaire, mais, selon l'invention, le système peut comporter plusieurs couples de données spécifiques si le volume de données applicatives à gérer le nécessite.

Selon l'invention, lors de la phase de conception du logiciel du calculateur embarqué, une organisation des données spécifiques au programme de supervision DA.PANDA selon une structure de données adaptée est prévue pour assurer une compatibilité ascendante de toutes les données applicatives variables liées à la maintenance et à l'utilisation du système, conformément à la méthode décrite ci-après.

Il est en effet prévu, selon l'invention, un accès au calculateur embarqué par un outil externe de maintenance connecté au système. Selon l'invention, cet outil externe de maintenance accède aux données applicatives variables de maintenance et d'utilisation du système.

Conformément au procédé de maintenance du système, selon l'invention, l'outil externe de maintenance peut accéder aux données applicatives variables en parallèle de l'exécution des programmes d'application PA.1 à PA.x, en cours d'opération de maintenance, tout en fournissant des valeurs cohérentes de ces données applicatives DA.1 à DA.x et en prenant en compte les valeurs écrites par l'outil externe de maintenance sans qu'elles soient écrasées par lesdits programmes d'application PA.1 à PA.x.

A cette fin, le procédé de maintenance du système, selon l'invention, se déroule de la manière suivante.

Au démarrage du calculateur, le programme de supervision PA.PANDA effectue une copie des données applicatives variables DA.1 à DA.x des programmes d'application PA.1 à PA.x, lesdites données applicatives étant reçues et stockées au sein de la mémoire tampon du couple de données applicatives spécifiques au programme de supervision DA.PANDA.buffer.x,

Selon un mode de réalisation, des valeurs par défaut sont écrites dans la mémoire tampon DA.PANDA.buffer.x dans le cas où des données applicatives variables, obsolètes, ne sont pas/plus utilisées dans la version de logiciel actuellement mise en œuvre par le calculateur.

Le programme de supervision PA.PANDA utilise ces valeurs des données applicatives variables stockées dans la mémoire tampon buffer PA.PANDA.buffer pour répondre aux demandes de lecture de l'outil de maintenance, alors que les programmes d'application PA.1 à PA.x correspondant sont le cas échéant en train d'être exécutés.

Les valeurs des données applicatives DA.1 à DA.x lues par l'outil de maintenance ne correspondent pas nécessairement aux dernières valeurs produites par les programmes d'application PA.1 à PA.x, mais cela n'a pas d'importance dans la mesure où les évolutions sur les données lues sont négligeables lorsque le véhicule est en maintenance.

Pour la gestion d'une demande d'écriture d'une donnée applicative par l'outil de maintenance, la séquence mise en œuvre conformément au procédé de maintenance est décrite ci-dessous.

La nouvelle valeur de la donnée applicative à écrire est mémorisée par le programme de supervision PA.PANDA dans la mémoire tampon DA.PANDA.buffer.x.

Selon un mode de réalisation, des valeurs par défaut sont utilisées dans le cas où des données n'étaient pas disponibles dans l'outil de maintenance.

Le drapeau DA.PANDA.flag.x change d'état, de façon à permettre que soit procédé ultérieurement à la mémorisation dans le calculateur de la donnée applicative écrite à l'occasion d'une prochaine demande de redémarrage du calculateur.

Comme évoqué précédemment, la présente invention prévoit une structuration des données applicatives stockées par le programme de supervision PA.PANDA, ladite structuration ayant pour objectif de permettre une compatibilité ascendante lors d'une mise à jour du calculateur.

Cette compatibilité ascendante vise les accès à toutes les données applicatives variables DA.1 à DA.x, y compris si certaines de ces données applicatives variables sont supprimées ou ajoutées.

A cette fin, lors de la conception du programme de supervision, il est prévu que ledit programme de supervision PA.PANDA assure la gestion des adresses des données applicatives variables.

Une table de correspondance est établie et intégrée dans le programme de supervision PA.PANDA. Ladite table de correspondance est déterminée de façon à permettre, pour chaque version du logiciel P, d'associer chaque valeur présente dans la mémoire tampon DA.PANDA.buffer.x à une adresse de donnée applicative variable DA.x correspondante dans la mémoire volatile RAM.

De ce fait, la mémoire tampon DA.PANDA.buffer.x est composée de données occupant toujours la même place dans ladite mémoire tampon, de manière à assurer la permanence de la table de correspondance et donc une compatibilité pour les outils externes de maintenance, quelle que soit la version de logiciel du calculateur embarqué concerné.

Lorsqu'une donnée applicative variable n'est plus utilisée dans une nouvelle version du logiciel, la place correspondante dans la mémoire tampon est par conséquent conservée vide.

Lorsqu'une nouvelle donnée applicative variable est créée dans une nouvelle version du logiciel, une nouvelle place lui est associée dans la mémoire tampon DA.PANDA.buffer.x, à la suite des adresses déjà utilisée.

Lorsqu'une donnée applicative variable est modifiée, quant à sa taille ou à son interprétation par exemple, dans une nouvelle version du logiciel, il est procédé à la suppression de l'ancienne donnée applicative, dont la place dans la mémoire tampon est donc conservée vide, et à l'ajout de la nouvelle donnée applicative.

Il est en outre prévu que si la mémoire tampon DA.PANDA.buffer.x atteint une taille trop importante devient trop gros par rapport au protocole de lecture des outils de maintenance, une nouveau mémoire tampon est créée en plus la mémoire tampon existante.

La présente invention permet par conséquent, au moyen d'un système - ou sous-système - de calculateur embarqué, comprenant un programme de supervision spécifique PA.PANDA disposant d'une table de correspondance associant tout emplacement de la mémoire tampon DA.PANDA.buffer.x du programme de supervision à une adresse de donnée applicative en mémoire volatile RAM, d'effectuer une mise à jour du logiciel du calculateur embarqué, sans perte de donnée, en parallèle de l'exécution des programmes d'application dudit logiciel, tout en assurant une compatibilité ascendante.

## Revendications

1. Système embarqué piloté destiné à un véhicule, ledit système comprenant un calculateur pour la gestion du système embarqué ploté, ledit calculateur comprenant un ensemble de programmes (P) et des ressources matérielles (M) pour exécuter lesdits programmes (P), lesdites ressources matérielles (M) comprenant une pluralité de mémoires, dont au moins une mémoire non volatile réinscriptible (NVRAM) et une mémoire volatile (RAM), et une unité de calcul (M.1), lesdits programmes (P) comprenant au moins deux programmes d'application (PA.1, PA.x, PA.PANDA) comprenant un programme de supervision (PA.PANDA) et au moins un programme d'application fonctionnelle (PA.1, PA.x), ledit au moins un programme d'application fonctionnelle (PA.1, PA.x) présentant des données applicatives (DA.1, DA.x) lues et écrites en des adresses de ladite au moins une mémoire volatile (RAM) lorsque ledit programme d'application fonctionnelle (PA.1, PA.x) correspondant est exécuté par le calculateur, ledit programme de supervision (PA.PANDA) présentant au moins un couple de données comprenant une mémoire tampon (DA.PANDA.buffer.x) et un drapeau (DA.PANDA.flag.x), ladite mémoire tampon (DA.PANDA.buffer.x) comprenant des emplacements et étant configurée pour que lesdits emplacements reçoivent des données applicatives (DA.1, DA.x) lorsqu'une opération de maintenance est exécutée par un outil de maintenance connecté au système alors qu'au moins un programme d'application fonctionnelle (PA.1, PA.x) est exécuté par le calculateur, et ledit drapeau (DA.PANDA.flag.x) étant configuré pour changer de valeur lorsque l'outil de maintenance requiert l'écriture de données applicatives, le programme de supervision (PA.PANDA) comprenant en outre une table de correspondance prédéterminée établissant une correspondance entre l'emplacement de chaque donnée applicative (DA.1, DA.x) reçue dans la mémoire tampon (DA.PANDA.buffer.x) et les adresses correspondantes desdites données applicatives (DA.1, DA.x) en mémoire volatile (RAM), lesdites données applicatives (DA.1, DA.x) reçues en mémoire tampon du programme de supervision étant ordonnées dans les emplacements de ladite mémoire tampon (DA.PANDA.buffer.x) selon ladite table de correspondance prédéterminée.

2. Système selon la revendication 1, le calculateur comprenant au moins un programme de base, ledit au moins un programme de base comprenant un programme de gestion des accès en lecture et en écriture à ladite au moins une mémoire non volatile (NVRAM).

3. Système selon l'une des revendications précédentes, comprenant un programme de gestion des communications avec l'outil externe de maintenance.

4. Procédé de maintenance d'un système embarqué piloté selon l'une des revendications 1 à 3, comprenant les étapes suivantes :
- au démarrage du calculateur, la copie, par le programme de supervision (PA.PANDA), des données applicatives (DA.1, DA.x) dudit au moins un programme d'application fonctionnelle (PA.1, PA.x), lesdites données applicatives (DA.1, DA.x) étant reçues et stockées au sein de la mémoire tampon (DA.PANDA.buffer.x) du programme de supervision (PA.PANDA),
- l'utilisation, par le programme de supervision (PA.PANDA), des données applicatives (DA.1, DA.x) dans la mémoire tampon (DA.PANDA.buffer.x) pour répondre à des demandes de lecture desdites données applicatives (DA.1, DA.x) par l'outil externe de maintenance, y compris alors que les programmes d'application (PA.1, PA.x) lisant et/ou écrivant lesdites données applicatives (DA.1, DA.x) sont en cours exécution.

5. Procédé de maintenance selon la revendication précédente, dans lequel une valeur par défaut d'une donnée applicative obsolète est écrite dans la mémoire tampon (DA.PANDA.buffer.x) dans le cas où ladite donnée applicative obsolète n'est pas utilisée dans l'ensemble de programmes (P) mis en œuvre par le calculateur.

6. Procédé de maintenance selon l'une des revendications 4 à 5, comprenant les étapes suivantes, lorsque l'outil externe de maintenance demande l'écriture d'une nouvelle valeur d'une donnée applicative :
- la mémorisation de la nouvelle valeur de la donnée applicative à écrire, par le programme de supervision (PA.PANDA), dans la mémoire tampon (DA.PANDA.buffer.x), à l'emplacement correspondant à ladite donnée applicative dans la mémoire tampon (DA.PANDA.buffer.x) selon la table de correspondance,
- le changement d'état du drapeau (DA.PANDA.flag.x), en vue de permettre la mémorisation dans le calculateur de la nouvelle valeur de la donnée applicative lors du prochain redémarrage du calculateur.

7. Procédé de maintenance selon la revendication précédente, dans lequel une valeur par défaut de la donnée applicative à écrire est utilisée dans le cas où une nouvelle valeur n'est pas disponible dans l'outil externe de maintenance.

8. Véhicule automobile comprenant un système selon l'une des revendications 1 à 3.

## Patentansprüche

1. Kontrolliertes Bordsystem, das für ein Fahrzeug bestimmt ist, wobei das System einen Computer zum Verwalten des eingezeichneten Bordsystems umfasst, wobei der Computer einen Satz von Programmen (P) und Hardwareressourcen (M) zum Ausführen der Programme (P) umfasst, wobei die Ressourcen Hardware (M), die mehrere Speicher umfasst, einschließlich mindestens eines wiederbeschreibbaren nichtflüchtigen Speichers (NVRAM) und eines flüchtigen Speichers (RAM), und eine Berechnungseinheit (M.1), wobei die Programme (P) mindestens zwei Programme umfassen Anwendung (PA.1, PA.x, PA.PANDA), umfassend ein Überwachungsprogramm (PA.PANDA) und mindestens ein funktionales Anwendungsprogramm (PA.1, PA.x), wobei mindestens ein Programm funktionale Anwendung (PA.1, PA.x) mit Anwendungsdaten (DA.1, DA.x), die an Adressen des mindestens einen flüchtigen Speichers (RAM) gelesen und geschrieben werden, wenn das funktionale Anwendungsprogramm (PA.1, PA.x) entsprechend wird vom Computer ausgeführt, wobei das Programm Überwachung (PA.PANDA) mit mindestens einem Datenpaar, umfassend einen Pufferspeicher (DA.PANDA.buffer.x) und ein Flag (DA.PANDA.flag.x), wobei der Pufferspeicher (DA.PANDA.buffer.x)) Standorte umfassen und so konfiguriert sein, dass diese Standorte Anwendungsdaten (DA.1, DA.x) empfangen, wenn ein Wartungsvorgang von einem an das System angeschlossenen Wartungstool ausgeführt wird, während mindestens ein Anwendungsprogramm vorhanden ist Die Funktion (PA.1, PA.x) wird vom Computer ausgeführt, und das Flag (DA.PANDA.flag.x) wird so konfiguriert, dass sich der Wert ändert, wenn das Wartungstool das Schreiben von Anwendungsdaten, dem Programm, erfordert Überwachung (PA.PANDA), ferner umfassend eine vorbestimmte Korrespondenztabelle, die eine Korrespondenz zwischen dem Ort jedes Anwendungspufferelements (DA.1, DA.x), das im Pufferspeicher (DA.PANDA.buffer.x) empfangen wird, und die entsprechenden Adressen der Anwendungsdaten (DA.1, DA.x) im flüchtigen Speicher Datei (RAM), wobei die im Pufferspeicher des Überwachungsprogramms empfangenen Anwendungsdaten (DA.1, DA.x) an den Stellen des Pufferspeichers (DA.PANDA.buffer.x) gemäß der vorbestimmten Korrespondenztabelle angeordnet sind.

2. System nach Anspruch 1, wobei der Computer mindestens ein Basisprogramm umfasst, wobei das mindestens eine Basisprogramm ein Programm zum Verwalten des Lese- und Schreibzugriffs auf den mindestens einen nichtflüchtigen Speicher (NVRAM) umfasst.

3. System nach einem der vorhergehenden Ansprüche, umfassend ein Programm zum Verwalten der Kommunikation mit dem externen Wartungstool.

4. Verfahren zur Aufrechterhaltung eines Bordsystems, das gemäß einem der Ansprüche 1 bis 3 gesteuert wird und die folgenden Schritte umfasst:
- Wenn der Computer startet, kopiert das Überwachungsprogramm (PA.PANDA) die Anwendungsdaten (DA.1, DA.x) des mindestens einen funktionalen Anwendungsprogramms (PA.1, PA.x). wobei die Anwendungsdaten (DA.1, DA.x) empfangen und im Pufferspeicher (DA.PANDA.buffer.x) des Überwachungsprogramms (PA.PANDA) gespeichert werden;
- Verwendung der Anwendungsdaten (DA.1, DA.x) im Pufferspeicher (DA.PANDA.buffer.x) durch das Überwachungsprogramm (PA.PANDA), um auf Anfragen zum Lesen dieser Daten zu antworten Anwendungen (DA.1, DA.x) durch das externe Wartungstool, einschließlich während die Anwendungsprogramme (PA.1, PA.x) die Anwendungsdaten (DA.1, DA) lesen und / oder schreiben laufen.

5. Wartungsverfahren gemäß dem vorhergehenden Anspruch, bei dem ein Standardwert veralteter Anwendungsdaten in den Pufferspeicher (DA.PANDA.buffer.x) geschrieben wird, falls diese veralteten Anwendungsdaten nicht verwendet werden, in der Reihe von Programmen (P), die vom Computer implementiert werden.

6. Wartungsverfahren nach einem der Ansprüche 4 bis 5, umfassend die folgenden Schritte, wenn das externe Wartungstool das Schreiben eines neuen Werts von Anwendungsdaten anfordert:
- die Speicherung des neuen Wertes der vom Überwachungsprogramm (PA.PANDA) zu schreibenden Anwendungsdaten im Pufferspeicher (DA.PANDA.buffer.x) an der Stelle, die den Anwendungsdaten in der Pufferspeicher (DA.PANDA.buffer.x) gemäß der Korrespondenztabelle,
- die Statusänderung des Flags (DA.PANDA.flag.x), um die Speicherung des neuen Werts der Anwendungsdaten beim nächsten Neustart des Computers auf dem Computer zu ermöglichen.

7. Wartungsmethode gemäß dem vorhergehenden Anspruch, bei der ein Standardwert der zu schreibenden Anwendungsdaten verwendet wird, falls im externen Wartungstool kein neuer Wert verfügbar ist.

8. Kraftfahrzeug mit einem System nach einem der Ansprüche 1 bis 3.

## Claims

1. Controlled on-board system intended for a vehicle, said system comprising a computer for managing the plotted on-board system, said computer comprising a set of programs (P) and hardware resources (M) for executing said programs (P), said hardware resources (M) comprising a plurality of memories s , including at least one rewritable non-volatile memory (NVRAM) and one volatile memory (RAM), and a computing unit (M.1),
said programs (P) comprising at least two programs d'application (PA.1, PA.x,
PA.PANDA) comprising a supervision program (PA.PANDA) and at least one functional application program (PA.1, PAx), said at least one functional application program (PA.1,
PA. x) presenting application data (DA.1, DA.x) read and written at addresses of said at least one volatile memory (RAM) when said corresponding functional application program (PA.1,
PA. x) is executed by the computer, said supervision program (PA.PANDA) having at least one data pair comprising a buffer memory (DA.PANDA.buffer.x) and a flag (DA.PANDA.flag.x), said buffer memory (DA.PANDA.buffer.x) comprising locations s and being configured so that said locations receive application data (DA.1,
DA.x) when a maintenance operation is performed by a maintenance tool connected to the system while at least one functional application program (PA.1, PA.x) is executed by the computer, and said flag (DA.PANDA.flag.x) being configured to change value when the maintenance tool requires the writing of application data, the supervision program (PA.PANDA) further comprising a predetermined correspondence table establishing a correspondence between the location of each application data (DA.1, DA.x) received in the buffer memory (DA.PANDA.buffer.x) and the corresponding addresses of said application data (DA.1, DA.x) in volatile memory (RAM), said application data (DA.1, DA.x) received in buffer memory d a supervision program being ordered in the locations of said buffer memory (DA.PANDA.buffer.x) according to said predetermined correspondence table .

2. System according to Claim 1, the computer comprising at least one basic program, said at least one basic program comprising a program for managing read and write access to said at least one non-volatile memory (NVRAM).

3. System according to one of the preceding claims, comprising a program for managing communications with the external maintenance tool.

4. Method for maintaining a piloted on-board system according to one of claims 1 to 3, comprising the following steps :
- when the computer starts up, the copy, by the supervisor program (PA.PANDA), application data (DA.1, DA.x) of udit at least one program application functional (PA.1, PA. x), said application data (DA.1, DA.x) being received and stored in the buffer memory (DA.PANDA.buffer.x) of the supervision program (PA.PANDA),
- the use, by the supervision program (PA.PANDA), of the application data (DA.1, DA.x) in the buffer memory (DA.PANDA.buffer.x) to respond to read requests of said application data (DA.1, DA.x) by the external maintenance tool, including while the application programs (PA.1, PA.x) reading and / or writing said application data (DA.1,
DA.x) are running.

5. Maintenance method according to the preceding claim, wherein a value by default an outdated application data e s written t in the buffer (D A.PANDA.buffer .x) where said given application obsolete n ' est not used in the set of programs (P) implemented by the computer.

6. Maintenance method according to any of claim s 4-5, comprising the following steps, when the maintenance request external tool writing a new value of a given application :
- the storage of the new value of the application data to be written, by the supervisor program (PA.PANDA) in the buffer (DA.PANDA.buffer. X), at the location corresponding to said applicative data in memory buffer (D A.PANDA. buffer.x) according to the correspondence table,
- the change the state of the flag (DA.PANDA.flag.x), in order to allow storage in the computer of the new value of the application data during the next restart of the computer.

7. Maintenance method according to the preceding claim, wherein a vale core default of applicative data to be written is used in the case where a new value n ' is not provided in the tool external maintenance.

8. Motor vehicle comprising a system according to one of claims 1 to 3.
